Europäisches Patentamt

European Patent Office

Office européen des brevets

(19)

(11) EP 0 792 035 A2

(12) EUROPEAN PATENT APPLICATION

(43) Date of publication:
27.08.1997 Bulletin 1997/35

(51) Int Cl.$^6$: H04B 10/17, H04J 14/02

(21) Application number: 97300871.7

(22) Date of filing: 11.02.1997

(84) Designated Contracting States:
DE GB

(30) Priority: 23.02.1996 US 613750
10.10.1996 US 728629

(71) Applicant: LUCENT TECHNOLOGIES INC.
Murray Hill, New Jersey 07974-0636 (US)

(72) Inventors:
• Srivastava, Atul Kumar
  Eatontown, New Jersey 07724 (US)
• Sulhoff, James W.
  Ocean, New Jersey 07712 (US)
• Sun, Yan
  Middletown, NJ 07748 (US)
• Tkach, Robert William
  Little Silver, New Jersey 07739 (US)
• Zyskind, John Lehrer
  Shrewsbury, New Jersey 07702 (US)

(74) Representative:
Watts, Christopher Malcolm Kelway, Dr. et al
Lucent Technologies (UK) Ltd,
5 Mornington Road
Woodford Green Essex, IG8 0TU (GB)

(54) Method of fast gain control in WDM optical networks

(57) In a WDM network employing a plurality of optical amplifiers in at least one optical fiber link, a system and method for dynamically controlling gain in accordance with the collective behavior of the amplifier chain. According to the present invention, the required response time of dynamic gain control is selected substantially inversely relative to the number of amplifiers in the communication path. Illustratively, in a large-scale optical network (with signal channel paths traversing say, a hundred optical amplifiers), the response time of gain control in accordance with the present invention may be on the order of 5 µs or even less.

*FIG. 1*

## Description

### Field of the Invention

The present invention relates generally to optical fiber communication networks and, more particularly, to systems and methods for dynamically controlling gain in accordance with the collective behavior of the amplifier chains employed in the links of such networks.

### Background of the Invention

A dramatic increase in the information capacity of an optical fiber can be achieved by the simultaneous transmission of optical signals over the same fiber from many different light sources having properly spaced peak emission wavelengths. By operating each source at a different peak wavelength, the integrity of the independent messages from each source is maintained for subsequent conversion to electric signals at the receiving end. This is the basis of wavelength division multiplexing (WDM).

Wavelength switched optical networks potentially offer high capacity networking at lower cost than current electronically switched networks. The rare-element doped fiber amplifiers such, for example, as erbium doped fiber amplifiers (EDFA's) in the nodes and repeaters of such networks will each be traversed by multiple signal channels following diverse routes. In optical amplifiers such as EDFA's, amplified spontaneous emission (ASE) is the major source of noise. ASE originates from the spontaneous emission of incoherent light over the full gain bandwidth of the amplifier. This is the random noise contribution of the amplifier. In the wavelength domain, gain saturation induced by a data channel operating at $\lambda_1$ produces a level change in another data channel at wavelength $\lambda_2$. If the optical powers in the transmission fibers are too high, optical nonlinearities, such as Stimulated Brillouin Scattering, can occur and degrade the signals.

In optically amplified systems, the above described noise sources present two limitations on the amplifier operating range. At low input signal levels the amplifier random noise contribution, ASE, causes bit errors (signal-spontaneous beat noise) while at large input signal levels, nonlinearities in the transmission medium can also add noise which degrades performance.

Although automatic gain control circuit (AGC) employing laser feedback at the detection end can compensate for fluctuations in the data stream that occur on the order of 1 ms, significant crosstalk between channels can occur for multichannel applications such as wavelength division multiplexing (WDM), especially when channel(s) is/are dropped or added to the system. The number of channels traversing an EDFA may, in fact, change suddenly as a result of a network reconfiguration or a fault that interrupts some of the channels. To prevent performance penalties in a high capacity network, the power excursions experienced by the surviving channels -- those which share an amplifier with the channels directly affected by the fault or reconfiguration -- should be limited when channels are added and when channels are dropped.

The gain medium in an EDFA has a comparatively long excited state lifetime or relaxation time, and for this reason is generally regarded as allowing for a larger saturation energy and hence, as exhibiting virtually no modulation of the saturation level at high speed data pulses (pulse period < 1 ns). In fact, it has been reported that transient effects of gain saturation and recovery in *an individual amplifier* typically occur on a 100 µs - 1 ms time scale. Desurvire et al, <u>Erbium Doped Fiber Amplifiers</u>, 1994, p. 412. The inventors herein have, however, observed gain dynamics in a *chain* of EDFA's almost two orders of magnitude faster than this and, for large scale wavelength routed networks, gain dynamics three orders of magnitude faster may be predicted. These fast transients in chains of amplifiers may ultimately constrain the design or extent of multiwavelength optical networks. Accordingly, a need is recognized for dynamic gain control fast enough to ensure reliable service in high capacity networks employing significant numbers of optical amplifiers in the communication paths thereof.

### Summary of the Invention

In accordance with the present invention, the aforementioned deficiencies are overcome and an advance is made in the art by providing, in an optical network employing a plurality of optical amplifiers along a communication path, a system and method for dynamically controlling gain in accordance with the collective behavior of the amplifier chain.

Essentially, the present invention is based upon the recognition that the required response time of dynamic gain control bears a substantially inverse relation to the number of amplifiers in the communication path. Illustratively, in a large-scale optical network (with signal channel paths traversing say, a hundred optical amplifiers), the required response time of gain control in accordance with the present invention may be on the order of 100 ns.

### Brief Description of the Drawings

The above features and advantages of the present invention will become apparent from the ensuing description of several preferred exemplary embodiments, which should be read in conjunction with the accompanying drawings, in which:

FIG. 1 depicts an illustrative optical network employing chains of optical amplifiers and fast-response dynamic gain control in accordance with the present invention;

FIG. 2 is a schematic block diagram of a dynamic gain control arrangement constructed in accordance with an illustrative embodiment of the present invention;

FIG. 3 is a schematic block diagram of a dynamic gain control arrangement constructed in accordance with a further embodiment of the present invention;

FIG. 4 is an apparatus constructed to simulate a communication link in a large scale network employing a plurality of optical amplifiers, from which the power transients experienced by surviving channels when one or more channels are added or dropped was measured;

FIG. 5 is a graphical representation of time response measurement for the experimental apparatus of FIG. 4, depicting the output power of the 2nd, 4th, 6th, 8th, and 10th amplifiers in a chain when four of eight channels were dropped;

FIG. 6 is a graphical representation of time response measurement for the experimental apparatus of FIG. 4, depicting the output power on an expanded time scale of the 2nd, 4th, 6th, 8th, and 10th amplifiers in a chain when four of eight channels are dropped;

FIG. 7 depicts the spectrum, for the experimental apparatus similar to that of FIG. 4, after five optical amplifiers, where the input power is supplied equally by four lasers, each at the wavelength of a different channel;

FIG. 8 is a graphical representation of time response measurement for the experimental apparatus similar to that of FIG. 4 where the signal power is provided by 4 lasers, depicting, upon the interruption of two of the four channels measured in FIG. 7, the signal power response in the surviving two channels;

FIGS. 9 and 10 demonstrate the inverse relationship, observed using the experimental apparatus of FIG. 4, between the number of amplifiers in a chain to the response times required to limit power excursions after dropping and adding channels, respectively.

## Detailed Description of the Invention

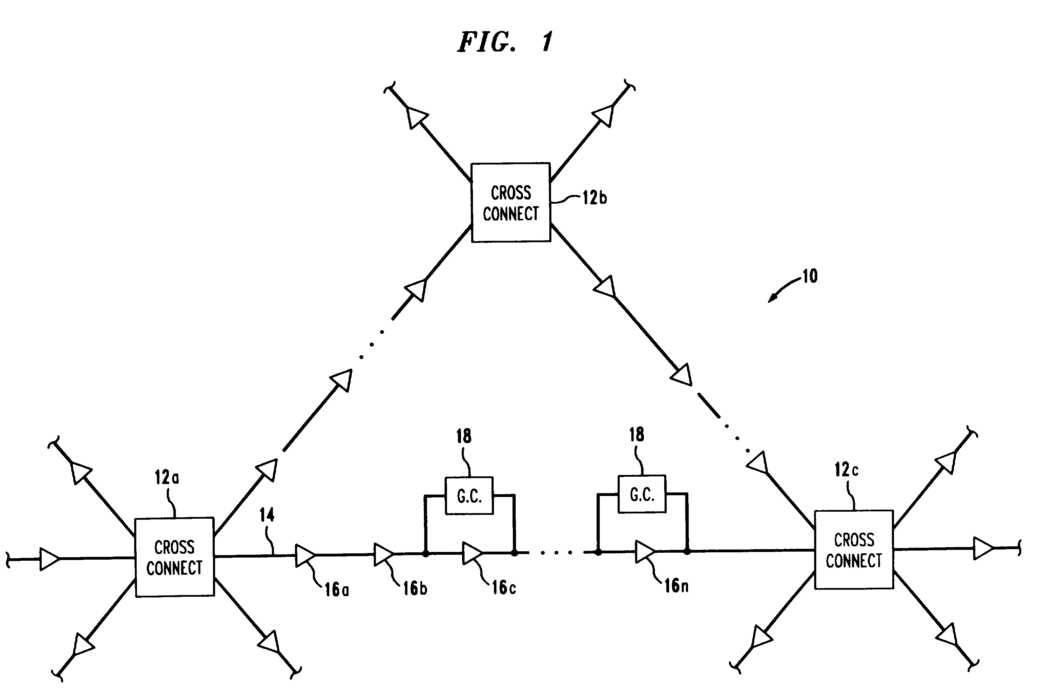

A portion of an illustrative large-scale WDM optical network 10 is shown schematically in Figure 1. As seen in FIG. 1, wavelength division multiplexed data is transmitted via multiple wavelengths or channels, between a plurality of cross-connect switches or nodes distributed throughout the network, via optical fiber links. Illustratively, network 10 may include many such nodes. For purposes of clarity and ease of illustration, however, only three such switches -- indicated generally at 12a, 12b, and 12c are shown. As can be seen in FIG. 1, the optical fiber links between a pair of nodes, as for example, link 14 that interconnects cross-connect switches 12a and 12c, typically may include a number of EDFA optical amplifiers -- these being indicated generally at 16a through 16n; these EDFA's can have a typical spacing of say 40 km.

Essentially, the present invention is based on the recognition by the inventors herein that the gain dynamics in a *chain* of EDFA's such as those deployed in link 14 of network 10 may be up to several orders of magnitude faster than those reported for a single amplifier. To this end, at least some of the amplifiers in an optical link of network 10 are provided with a dynamic gain control arrangement 18 that is fast enough to ensure continued reliable service, in the surviving channels being transmitted along the link, when one or more channels are suddenly dropped or added, as may be experienced when a system reconfiguration or fault interrupts some of the channels.

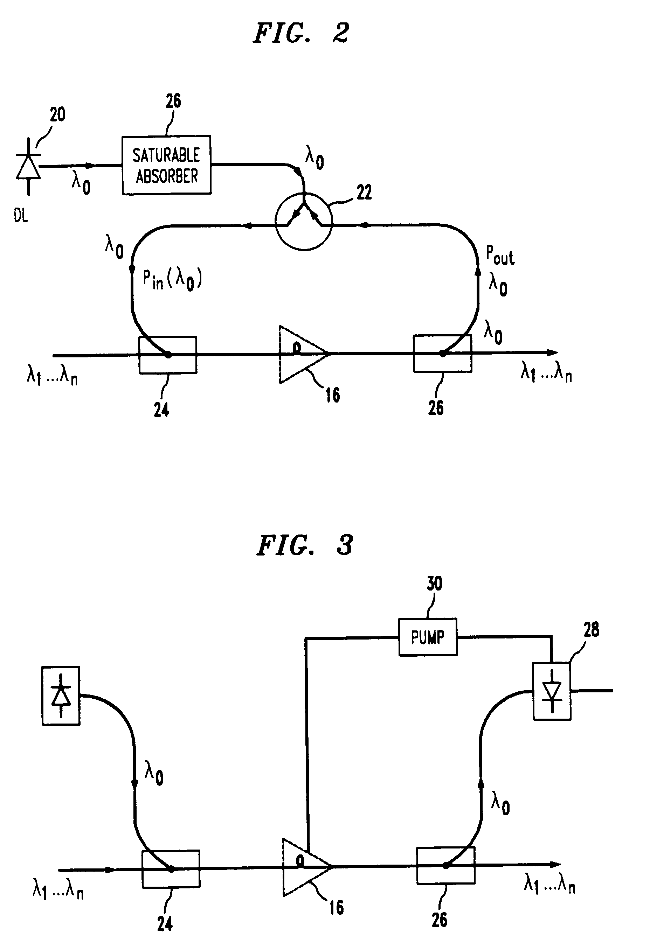

There is shown in FIG. 2 a gain control arrangement configured to implement fast-response gain control in accordance with an illustrative embodiment of the present invention. In the illustrative arrangement shown in FIG. 2, optical amplifier 16 should be understood to be one of a chain of EDFA amplifiers that may be found along a communication link, as discussed in connection with FIG. 1 above. Wavelengths $\lambda_1$-$\lambda_n$, representing multiple channels of a wavelength switched network, are received at the input of amplifier 16 in a conventional manner and amplified for delivery to the next amplifier or destination node.

As can be seen in FIG. 2, a probe and control signal $\lambda_0$ is also launched into the amplifier 16. Launching of the probe signal and control is accomplished, in the illustrative embodiment, by a diode laser source 20, a three port optical circulator 22, and a pair of optical couplers 24 and 26. A saturable absorber 26 is coupled between laser source 20 and circulator 22. It is believed that operating principles of saturable absorbers are well understood by those skilled in the art and a detailed description thereof is deemed to be unnecessary to gaining an understanding of the present invention. It suffices to say that in an atomic medium, either the attenuation coefficient or the gain coefficient $\alpha_m$, in an atomic medium will saturate with increasing signal intensity I in the general fashion given by:

$$\alpha_m = \alpha_m(I) = \alpha_{m0} x \frac{1}{1 + I/I_{sat}} = \alpha_{m0} x \frac{1}{1 + const\ x\ signal\ power}$$

where $a_{m0}$ is the small signal (unsaturated) attenuator or gain coefficient; $I$ is the applied signal intensity (usually expressed as power per unit area); and $I_{sat}$ is a saturation intensity at which the gain or loss coefficient is saturated down to half its initial value $a_{m0}$. It will be readily appreciated by those skilled in the art that when a channel is dropped, gain increases and the output power of probe and control channel $\lambda_0$ also increases. As a result, the power delivered to saturable absorber increases so that the loss introduced to the signal incident thereon from source 20 decreases. Accordingly, the input power $P_{in}(\lambda_0)$ delivered to the input of amplifier 16 via coupler 24 is increased and the gain thereof, consequently, is reduced.

With reference to FIG. 3, there is shown an alternate gain control configuration capable of providing the gain control response time required by the present invention. As seen in FIG. 3, in which like numerals refer to like elements, a photodiode 28 coupled to the output of amplifier 16 is utilized to control a pump light source 30. As will be readily appreciated by those skilled in the art, a pump light source as source 30 is typically used to pump light into the optical fiber to excite the rare-earth dopant so as to amplify the optical signal incident on the fiber. Based upon a comparison of the input power and output power of the probe signal $\lambda_0$, the amount of light pumped into EDFA 16 is adjusted in such a manner as to limit the gain excursions in each surviving channel to 0.5 dB when at least one channel is added and to 2.0 dB when at least one channel is dropped.

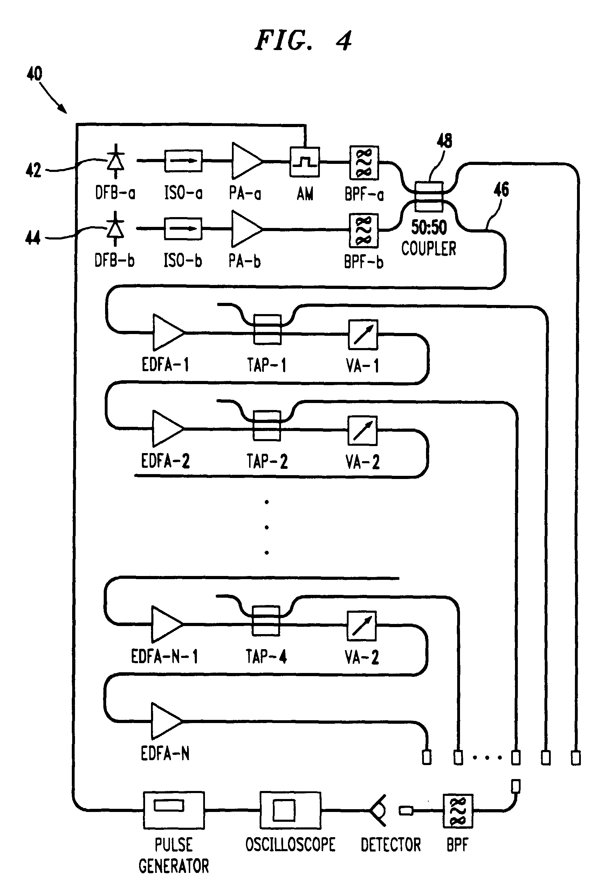

FIG. 4 is an apparatus 40 constructed to simulate a communication link in a large scale network employing a plurality of optical amplifiers, from which the power transients experienced by surviving channels when one or more channels are added or dropped was measured. As seen in FIG. 4, apparatus 40 includes two distributed feedback laser sources 42 and 44, each providing power equivalent to that of four channels launched onto fiber path 46 via a 50-50 coupler 48. To simulate 40 km spacing between each optical amplifier (EDFA), a variable attenuator (VA-1 through VA-N-1) was employed along fiber path 46. Channels were added or dropped and measurements were taken after each amplifier in order to observe the behavior of the surviving channels. The total input signal power to each amplifier was 6 dB, corresponding in a large scale network in a large scale network.

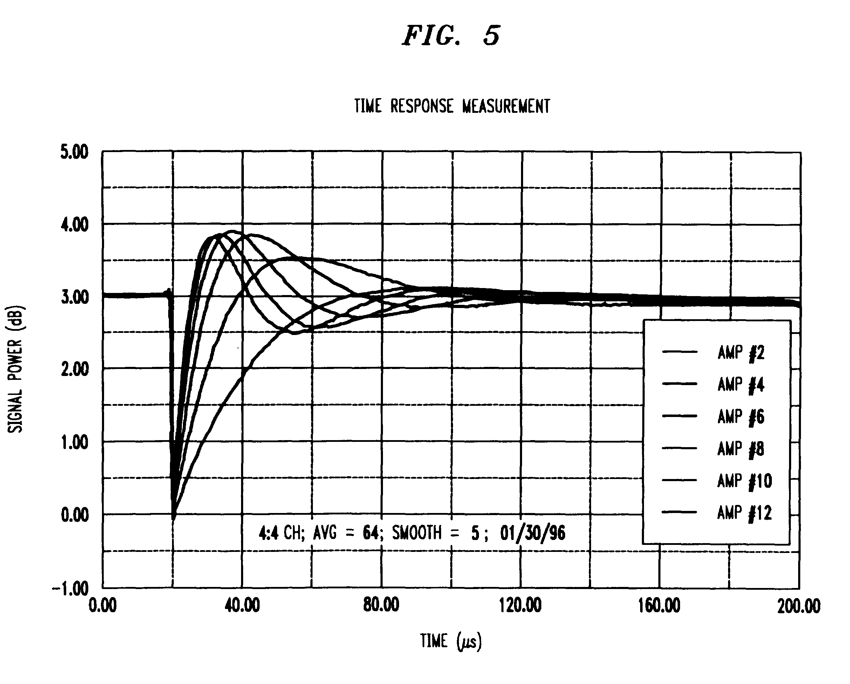

FIG. 5 is a graphical representation of time response measurement for the experimental apparatus of FIG. 4, depicting the output power of each amplifier 2, 4, 6, 8, 10, and 12 in a chain with 12 amplifiers when four of eight channels were dropped. The EDFA's were mid-amplifier pumped two stage EDFA's with 10 dB gain and dual 980 nm pumps. When one laser is blocked at time t=0, corresponding to a sudden loss of four of the eight channels, the output power of each EDFA immediately dropped by 3 dB and the power in each of the surviving channels then increased toward double the original channel power to conserve the amplifier output power.

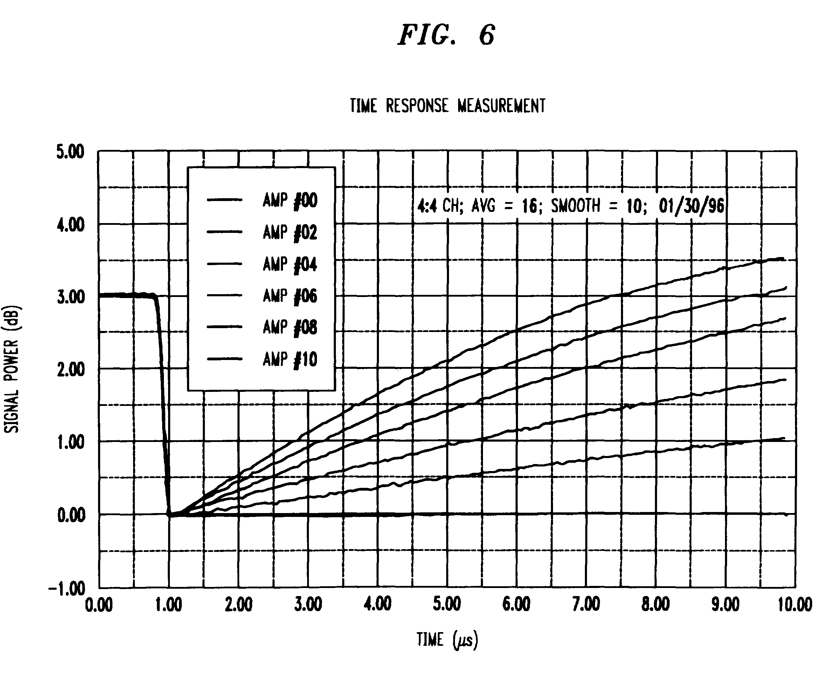

FIG. 6 is a graphical representation of time response measurement for the experimental apparatus of FIG. 4, depicting the output power of amplifiers 2, 4, 6, 8, and 10 in a chain for short time after four of eight channels are dropped. As seen in FIG. 5 and 6, for longer chains of amplifiers, the increase in power is faster -- with a peak overshooting twice the initial channel. These power transients are fast, two orders of magnitude faster than previous results for individual amplifiers.

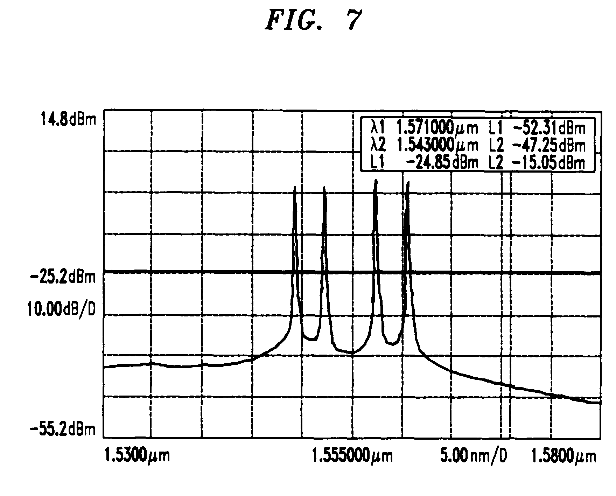

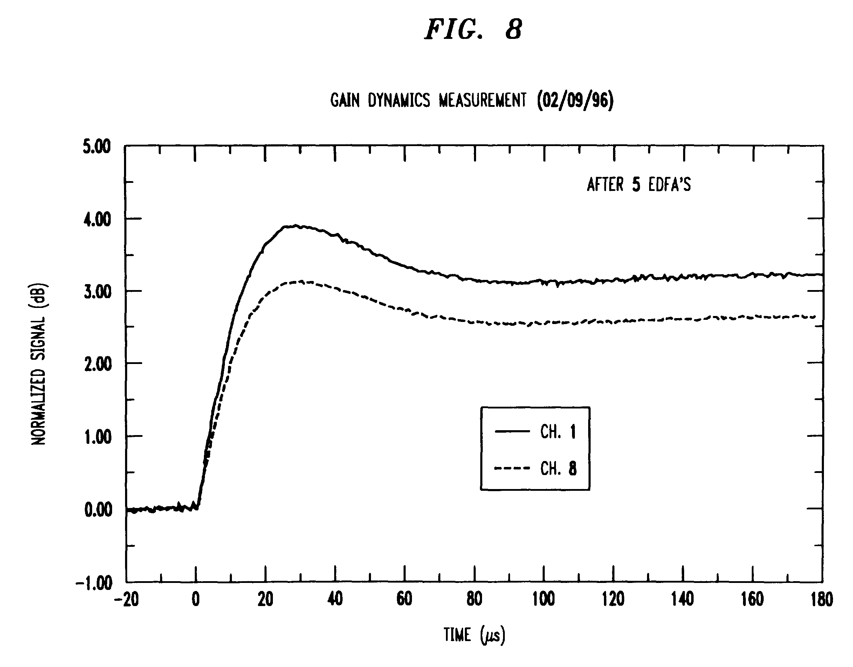

FIG. 7 depicts the spectrum, for an experimental apparatus similar to that of FIG. 4, after five optical amplifiers, where the input power is divided equally among four channels at 1549.3, 1552.5, 1557.4, and 1560.6 nm (wavelengths 1,3,6 and 8, respectively). After channels 3 and 6 were interrupted, surviving channels 1 and 8 suffered unacceptable power increases in short times, as seen in FIG. 8.

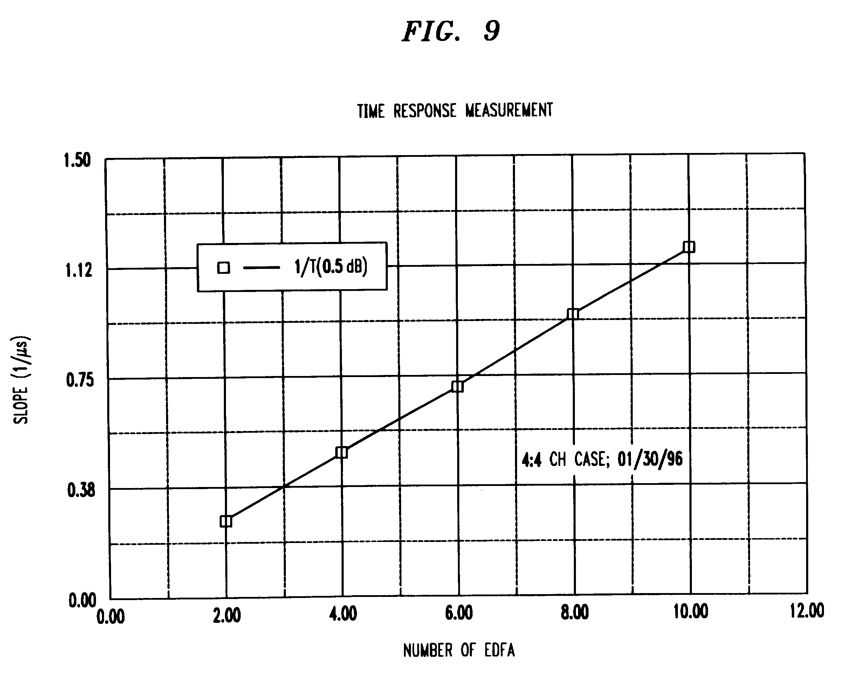

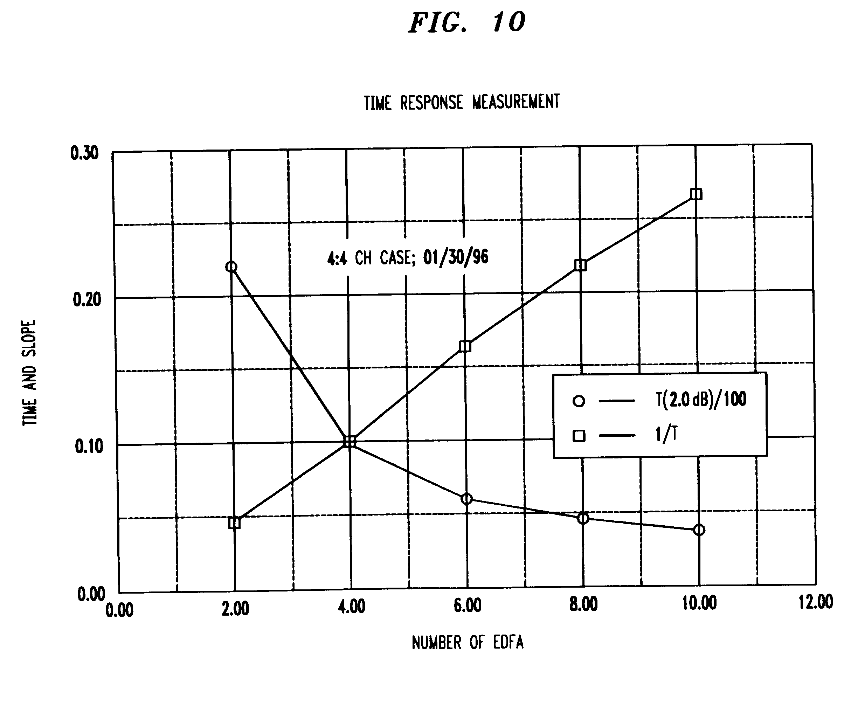

To prevent performance penalties in a large scale multiwavelength optical network, surviving channel power excursions must be limited to, say, for example, 0.5 dB when channels are added and 2 dB when channels are dropped. The response times required to limit the power excursions to 0.5 dB (850 ns after 10 amplifiers) and 2 dB (3.75 µs after 10 amplifiers) are inversely proportional to the number of amplifiers in the chain (FIGS. 9 and 10). To protect surviving channels in networks with paths traversing one hundred amplifiers, response times as short as 375 ns will be required when four channels are dropped and 200 ns when seven channels are dropped. Accordingly, dynamic gain control performed within a response time scaled to the size of the network, is required in order to maintain error free performance in surviving channels.

From the foregoing, it should be readily ascertained that the invention is not limited by the embodiments described above which are presented as examples only but may be modified in various ways within the intended scope of protection as defined by the appended patent claims.

**Claims**

1. A method of operating an optical communication network including an optical communication path having at least one upstream end and at least one downstream end and a plurality of rare-earth doped fiber optical amplifiers along the communication path, comprising:

   transmitting a wavelength division multiplexed optical signal between said upstream end and said downstream end, said multiplexed optical signal having a plurality of optical channels; adjusting the gain of at least some of said plurality of optical amplifiers when at least one channel is added or lost, said gain adjusting step being performed within less than 100 µs of loss or addition of channel.

2. The method of claim 1, wherein the optical amplifier is an erbium-doped fiber amplifier.

3. A high capacity optical communication network comprising at least one optical communication path in which a plurality of wavelength division multiplexed signal channels are transmitted between at least one upstream end and at least one downstream end thereof, comprising:

a plurality of rare earth doped optical fiber amplifiers;
a respective gain control arrangement, associated with at least some corresponding ones of said rare earth doped optical fiber amplifiers, for limiting power excursions in each surviving channel to no more than 3 dB when at least one channel is added and to no more than 6 dB when at least one channel is dropped.

4. The network of claim 3, wherein said at least one optical communication path includes at least two optical amplifiers, and wherein said gain control arrangement is operable to perform gain control upon loss of four channels within less than 100 μs.

5. The network of claim 3, wherein said at least one optical communication path includes one hundred optical amplifiers, and wherein said gain control arrangement is operable to perform gain control upon loss of four channels within less than 5 μs.

6. The network of claim 3, wherein said gain control arrangement includes a diode laser for generating a probe wavelength signal, a saturable absorber coupled to an output of said diode laser, and a three-port circulator having a first port coupled to the output of a corresponding one of said optical amplifiers, a second port coupled to an input of said corresponding optical amplifier, and a third port coupled to the saturable absorber, whereby an increase in amplifier gain as a result of a channel reconfiguration induces the saturable absorber to allow more of said probe signal to enter said optical amplifier.

FIG. 1

## FIG. 2

## FIG. 3

# FIG. 4

40

42 — DFB-a | ISO-a | PA-a | AM | BPF-a

44 — DFB-b | ISO-b | PA-b | BPF-b

48

50:50 COUPLER

46

EDFA-1 | TAP-1 | VA-1

EDFA-2 | TAP-2 | VA-2

⋮

EDFA-N-1 | TAP-4 | VA-2

EDFA-N

PULSE GENERATOR | OSCILLOSCOPE | DETECTOR | BPF

FIG. 5

TIME RESPONSE MEASUREMENT

## *FIG. 6*

TIME RESPONSE MEASUREMENT

4:4 CH; AVG = 16; SMOOTH = 10; 01/30/96

| | AMP #00 |
| | AMP #02 |
| | AMP #04 |
| | AMP #06 |
| | AMP #08 |
| | AMP #10 |

SIGNAL POWER (dB)

TIME (μs)

## FIG. 7

# FIG. 8

GAIN DYNAMICS MEASUREMENT (02/09/96)

AFTER 5 EDFA'S

CH. 1
CH. 8

NORMALIZED SIGNAL (dB)

TIME (μs)

EP 0 792 035 A2

## FIG. 9

TIME RESPONSE MEASUREMENT

4:4 CH CASE; 01/30/96

EP 0 792 035 A2

## FIG. 10

TIME RESPONSE MEASUREMENT

4:4 CH CASE; 01/30/96

TIME AND SLOPE

NUMBER OF EDFA

○ — T(2.0 dB)/100
□ — 1/T

EP 0 792 035 A2